# EUROPÄISCHE PATENTSCHRIFT

(11) **EP 0 723 896 B1**
(45) Veröffentlichungstag und Bekanntmachung des Hinweises auf die Patenterteilung: **16.01.2002**
(21) Anmeldenummer: 96100327.4
(22) Anmeldetag: 11.01.1996
(51) Int. Cl.: B60R 25/00

(54) **Verfahren zur Diebstahlsicherung motorangetriebener Kraftfahrzeuge**
Procedure for theft protection of motor driven vehicles
Procédé de protection anti-vol pour véhicules à moteur

(30) Priorität: 26.01.1995 DE 19502373
(43) Veröffentlichungstag der Anmeldung: 31.07.1996
(73) Patentinhaber: ROBERT BOSCH GMBH, 70442 Stuttgart (DE)
(72) Erfinder: Doerfler, Reiner, Dr., D-93138 Lappersdorf (DE); Friedrich, Ferdinand, D-90562 Heroldsberg (DE)
(74) Vertreter: Lachenmeir, Stefan

(56) Entgegenhaltungen:
- EP-A- 0 642 959
- DE-A- 4 313 779
- DE-A- 4 334 859
- DE-A- 4 414 644

## Beschreibung

Die Erfindung bezicht sich auf ein Verfahren zur Diebstahlsicherung motorangetriebener Kraftfahrzeuge gemäß dem Oberbegriff des Patentanspruchs 1.

Die stetig wachsende Zahl der Diebstähle motorangetriebener Kraftfahrzeuge - insbesondere von Personenkraftfahrzeugen - bereitet (nicht nur der Versicherungswirtschaft) in zunehmendem Maße ernsthafte Probleme. Mit der Zahl der Diebstähle wächst auch das Bedürfnis nach geeignetem und effizientem Diebstahlschutz. Zur-Diebstahlsicherung werden neben mechanischen Vorrichtungen (Lenkradsperren etc.) und mittels mechanischer oder elektronischer Schlüssel (Fernbedienung) betätigbaren Alarmanlagen zur Überwachung von Türkontakten, Stromschleifen oder Innenraumen heutzutage auch elektronische Wegfahrsperren für Kraftfahrzeuge mit vernetzten Steuergeräten angeboten, bei denen der Motorstart erst dann erfolgen kann, wenn ein zum Betrieb des Kraftfahrzeugs notwendiges Steuergerät (beispielsweise die Motorelektronik) ein "Freigabesignal" erhalten hat; bei bekannten Verfahren wird dieses Freigabesignal nur dann erzeugt, wenn ein elektronischer Schlüssel zwischen dem autorisierten Benutzer und einem Empfangsgerät ausgetauscht wurde (dies kann beispielsweise durch eine Fernbedienung oder durch kurzreichweitige Signale eines Transponders erfolgen). Falls die Wegfahrsperre mit einer Alarmanlage kombiniert ist, wird das Freigabesignal beim Erkennen eines Alarmfalls (zusätzlich zur Ausgabe optischer oder akustischer Signale) gesperrt.

Demzufolge können bekannte Diebstahlsicherungssysteme folgende elektronische Systemkomponenten aufweisen:
- einen elektronischen "Schlüssel" (beispielsweise ein Transponder oder eine Fernbedienung), der mit mechanischen Schlüsseln kombiniert werden kann (beispielsweise in einem gemeinsamen Gehäuse eingebaut),
- ein Steuergerät "Wegfahrsperre", das einerseits mit dem elektronischen Schlüssel und andererseits mit betriebsrelevanten Steuergeräten kommunizieren und diese sperren oder entsperren kann (falls das Steuergerät Wegfahrsperre nicht als eigenständiges Steuergerät vorhanden ist, wird dessen Funktionsumfang in andere Steuergeräte integriert),
- betriebsrelevante Steuergeräte, (beispielsweise das Motorsteuergerät oder das Getriebesteuergerät), deren Nicht-Funktionieren eine Bewegung des Fahrzeugs mit eigener Kraft unmöglich macht,
- Alarmanlagen und die dazugehörigen Sensoren.

Alle diese Systemkomponenten sind diebstahlrelevant; um die Diebstahlsicherung der Kraftfahrzeuge nicht einfach durch Austausch von einer oder mehreren der diebstahlrelevanten Systemkomponenten umgehen zu können, müssen für diese besondere Absicherungen vor und bei deren Inbetriebnahme (beispielsweise bei der Produktion und Lieferung) getroffen werden - insbesondere ist dies bei Ersatzteilen der Systemkomponenten von Belang. Üblicherweise wird deshalb aus Sicherheitsgründen für die Systemkomponenten ein zentraler Versand eingerichtet: nach einer Legitimation durch die anfordernde Stelle können die Systemkomponenten - insbesondere als Ersatzteile - nur von einer zuverlässigen Zentralstelle bezogen werden. Nachteilig hierbei ist aber, daß einerseits die Sicherheit beim Vertrieb und bei der Inbetriebnahme der Systemkomponenten nicht lückenlos gewährleistet werden kann, und daß andererseits eine weltweite und kurzfristige Verfügbarkeit der Systemkomponenten (Ersatzteile) nicht möglich ist.

Der Erfindung liegt die Aufgabe zugrunde, ein Verfahren zur Diebstahlsicherung motorangetriebener Kraftfahrzeuge anzugeben, das die genannten Nachteile vermeidet und mit dem eine einfache und dennoch sichere Inbetriebnahme der diebstahlrelevanten Systemkomponenten ermöglicht wird.
Diese Aufgabe wird erfindungsgemäß durch die Merkmale des Patentanspruchs 1 gelöst. Vorteilhafte Weiterbildungen der Erfindung ergeben sich aus den Unteransprüchen.

Die diebstahlrelevanten Systemkomponenten eines Diebstahlsicherungssystems werden mit zwei Nummern versehen, deren Zuordnung vom Hersteller bei der Produktion vorgenommen und von einer externen Zentralstelle (beispielsweise einem Zentralrechner) registriert und verwaltet wird: einer für die diebstahlrelevante Systemkomponente charakteristischen Seriennummer bzw. Identifikationsnummer (ID-Nummer) - diese wird so an der diebstahlrelevanten Systemkomponente angebracht oder in deren elektronischen Speicher eingeschrieben, daß sie im Klartext ausgelesen werden kann - und einer von außerhalb der diebstahlrelevanten Systemkomponente nichtauslesbaren (in der Regel unveränderbaren) individuellen Geheimnummer. Die Systemkomponenten des Diebstahlsicherungssystems können entweder direkt mit der Zentralstelle bidirektional kommunizieren oder indirekt über das die Wegfahrsperrenfunktion enthaltende Steuergerät als "Vermittlungsstelle" zwischen den Systemkomponenten und der Zentralstelle; beispielsweise erfolgt die Kommunikation unter Verwendung der Geheimnummern als individueller Kommunikationsschlüssel der jeweiligen Systemkomponente für die Kommunikation mit der Zentralstelle oder/und für die Kommunikation mit dem die Wegfahrsperrenfunktion enthaltenden Steuergerät.
Vor der erstmaligen Inbetriebnahme der Systemkomponente(n) wird mittels dieser beiden Nummern entweder durch direkte bidirektionale Kommunikation der Systemkomponente(n) mit der Zentralstelle oder durch indirekte Kommunikation der Systemkomponente(n) mit der Zentralstelle über das die Wegfahrsperrenfunktion enthaltende Steuergerät entweder im Falle der direkten Eingabe der (den) Systemkomponente(n) nach Überprüfung deren Geheimnummer von der Zentralstelle eine Codenummer als gemeinsamer Kommunikationsschlüssel des jeweiligen Diebstahlsicherungssystems zugeordnet oder im Falle der indirekten Eingabe die jeweilige Geheimnummer der Systemkomponente(n) überprüft und mit der Geheimnummer des die Wegfahrsperrenfunktion enthaltenden Steuergeräts verschlüsselt diesem Steuergerät mitgeteilt und dort unauslesbar abgespeichert. Vor der erstmaligen Inbetriebnahme eines Diebstahlsicherungssystems (Zupaarung bzw. Initialisierung der Systemkomponenten bei der Bandende-Programmierung vor der Inbetriebnahme des Kraftfahrzeugs) wird diese Kommunikation sukzessive für alle Systemkomponenten durchgeführt; vor der erstmaligen Inbetriebnahme einzelner neuer Systemkomponenten (Zupaarung der neuen Systemkomponenten beispielsweise beim Austausch als Ersatzteile) wird diese Kommunikation für die neuen Systemkomponenten - vorzugsweise unter Einbeziehung mindestens einer anderen (nicht-ausgetauschten) Systemkomponente - durchgeführt.
Bei der bidirektionalen Kommunikation sendet eine neue Systemkomponente ihre Seriennummer (ID-Nummer) als Klartext an die Zentralstelle, die das zugehörige Diebstahlsicherungssystem, die zugehörige Geheimnummer und ggf. die für das Diebstahlsicherungssystem gültige Codenummer (den gemeinsamen Kommunikationsschlüssel) ermittelt:
- bei der direkten Kommunikation einer Systemkomponente mit der Zentralstelle wird hieran anschließend entweder die Codenummer von der Zentralstelle - beispielsweise mit der Geheimnummer dieser Systemkomponente als Schlüssel - verschlüsselt und an die Systemkomponente (direkte Eingabe) übermittelt oder die Geheimnummer der Komponente von der Zentralstelle mit der Geheimnummer des Wegfahrsperren-Steuergeräts als Schlüssel verschlüsselt und an das die Wegfahrsperrenfunktion enthaltende Steuergerät (indirekte Eingabe) übermittelt; im Falle der direkten Eingabe bestimmt die jeweilige Systemkomponente, im Falle der indirekten Eingabe das die Wegfahrsperrenfunktion enthaltende Steuergerät durch Entschlüsselung - beispielsweise mit Hilfe ihrer jeweiligen Geheimnummer - den gemeinsamen Kommunikationsschlüssel des Diebstahlsicherungssystems bzw. die Geheimnummer der Systemkomponente. Zusätzlich kann vor der Übermittlung der Codenummer bzw. der Geheimnummer an eine neue Systemkomponente durch bidirektionale Kommunikation der Zentralstelle mit mindestens einer anderen Systemkomponenten (beispielsweise des die Wegfahrsperrenfunktion enthaltenden Steuergeräts) das Diebstahlsicherungssystem überprüft werden (beispielsweise kann die Geheimnummer und/oder die ID-Nummer der anderen Systemkomponente oder/und die Codenummer des Diebstahlsicherungssystems überprüft werden); erst bei erfolgter Verifizierung wird dann die Codenummer der neuen Systemkomponente bzw. die Geheimnummer des die Wegfahrsperrenfunktion enthaltenden Steuergeräts verschlüsselt mitgeteilt,
- bei der indirekten Kommunikation einer Systemkomponente mit der Zentralstelle wird nach erfolgreicher Verifizierung entweder die Codenummer von der Zentralstelle mit der Geheimnummer der Systemkomponente verschlüsselt und über das die Wegfahrsperrenfunktion enthaltende Steuergerät an die Systemkomponente weitergeleitet (direkte Eingabe) oder die Geheimnummer der Systemkomponente von der Zentralstelle verschlüsselt - beispielsweise mit Hilfe der Geheimnummer des die Wegfahrsperrenfunktion enthaltenden Steuergeräts - und an das die Wegfahrsperrenfunktion enthaltende Steuergerät (indirekte Eingabe) übermittelt; im Falle der direkten Eingabe bestimmt die jeweilige Systemkomponente, im Falle der indirekten Eingabe das die Wegfahrsperrenfunktion enthaltende Steuergerät durch Entschlüsselung - beispielsweise mit Hilfe der jeweiligen Geheimnummer - die Codenummer bzw. die Geheimnummer der kommunizierenden Systemkomponente. Zusätzlich kann vor Verifizierung der Geheimnummer einer neuen Systemkomponente durch bidirektionale Kommunikation der Zentralstelle mit mindestens einer anderen Systemkomponenten (über das die Wegfahrsperrenfunktion enthaltenden Steuergerät) das Diebstahlsicherungssystem überprüft werden (beispielsweise kann die Geheimnummer und/ oder die ID-Nummer einer weiteren Systemkomponente überprüft werden); erst bei erfolgter Verifizierung wird dann die Geheimnummer der neuen Systemkomponente dem die Wegfahrsperrenfunktion enthaltenden Steuergerät verschlüsselt mitgeteilt.

Der Datenverkehr (die Kommunikation) zwischen den Systemkomponenten und der Zentralstelle bei der direkten Kommunikation bzw. dem die Wegfahrsperrenfunktion enthaltenden Steuergerät und der Zentralstelle bei der indirekten Kommunikation wird mittels einer Übertragungseinheit (beispielsweise ein Interface-Rechner mit den zugehörigen Datenleitungen) vorgenommen. Zwischen den Systemkomponenten und der Übertragungseinheit bzw. dem die Wegfahrsperrenfunktion enthaltenden Steuergerät und der Übertragungseinheit erfolgt die Kommunikation über Verbindungsleitungen (beispielsweise eines Diagnosesteckers) oder leitungslos (kontaktlos, beispielsweise über eine Transponder-Schnittstelle). Zwischen den einzelnen Systemkomponenten erfolgt die Kommunikation mittels Übertragungsstrecken entweder leitungsgebunden oder leitungslos.

Für eine bestimmungsgemäße Verwendung der Systemkomponenten (d. h. deren Inbetriebnahme bzw. der Inbetriebnahme/dem Motorstart des Kraftfahrzeugs) ist die Kenntnis der Codenummer und damit des gemeinsamen Kommunikationsschlüssels (direkte Eingabe) in der Systemkomponente bzw. die Kenntnis der Geheimnummer der Systemkomponente (indirekte Eingabe) im die Wegfahrsperrenfunktion enthaltenden Steuergerät unbedingt erforderlich; die Systemkomponente wird somit erst verfügbar, wenn die Codenummer in die Systemkomponente eingegeben wurde bzw. deren Geheimnummer in das die Wegfahrsperrenfunktion enthaltende Steuergerät eingegeben wurde. Wie beschrieben, kann bei der direkten Eingabe die Geheimnummer der Systemkomponente als kryptographischer Schlüssel für den Datenverkehr zwischen der Zentralstelle und den Systemkomponenten dienen - insbesondere zur Verschlüsselung und Entschlüsselung der Codenummer, die als gemeinsamer Kommunikationsschlüssel innerhalb des Diebstahlsicherungssystems dient; bei der indirekten Eingabe dienen die Geheimnummern der Systemkomponenten als Kommunikationsschlüssel für die Kommunikation mit dem die Wegfahrsperrenfunktion enthaltenden Steuergerät, das bei der Paarung seinerseits mit der Zentralstelle unter Zuhilfenahme seiner Geheimnummer kommuniziert. Durch diese verifizierbare Kommunikation kann die Inbetriebnahme der Systemkomponenten (das "Aufschließen") zuverlässig abgesichert werden. Durch das vorgestellte Verfahren zur Diebstahlsicherung ist somit ein effizienter Diebstahlschutz gegeben, da Manipulationsversuchen wirksam vorgebeugt wird: die Diebstahlsicherung kann durch bloßen Austausch von diebstahlrelevanten Systemkomponenten nicht aufgehoben werden - dies ist nur durch eine authentische Kommunikation der Systemkomponente(n) mit der Zentralstelle möglich. Weiterhin kann in der Zentralstelle der Status des Kraftfahrzeugs (beispielsweise zugelassen, abgemeldet, gestohlen, verschrottet etc.) und des Diebstahlsicherungssystems (Zahl der Systemkomponenten, ausgetauschte Systemkomponenten etc.) gespeichert werden und bei jeder Kommunikation mit einer Systemkomponente des Diebstahlsicherungssystems überprüft werden, ob am Diebstahlsicherungssystem Manipulationen vorgenommen wurden.
Vorteilhafterweise können somit die Systemkomponenten nach ihrer Herstellung entweder zum Aufbau eines kompletten Diebstahlsicherungssystems oder als Ersatzteile zum Austausch bestehender Systemkomponenten weltweit dezentral auf Lager gehalten werden und sind demzufolge zur Inbetriebnahme schnell verfügbar, ohne daß eine Gefahr des Mißbrauchs besteht.

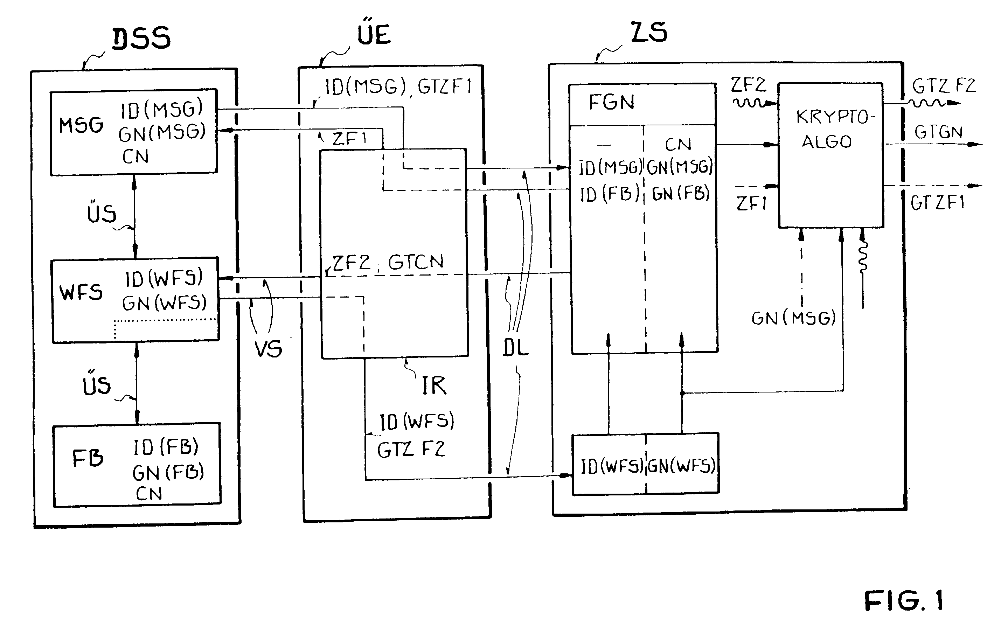

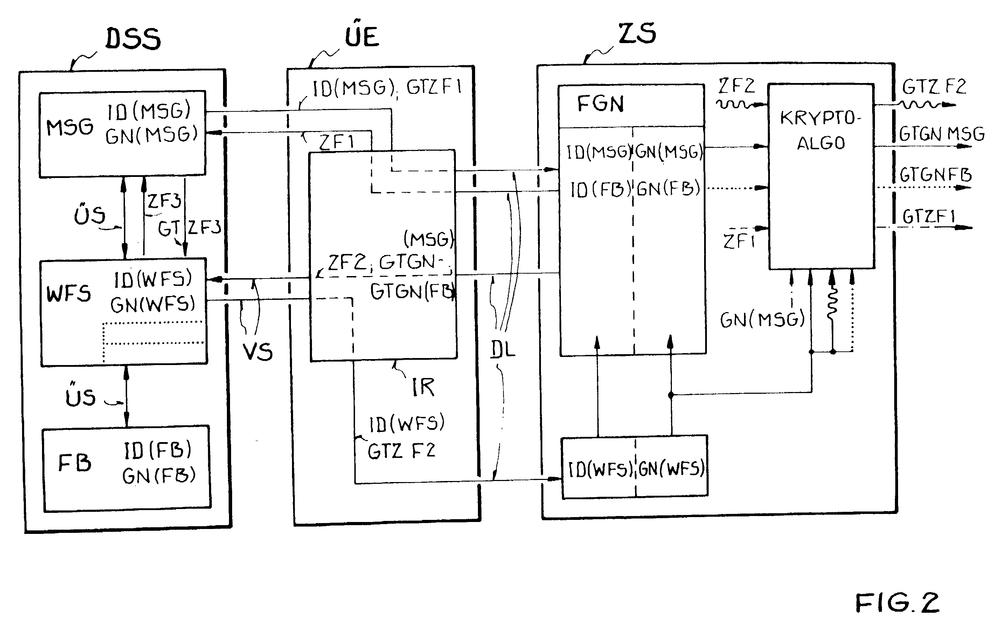

Anhand der Zeichnung wird im folgenden die Zupaarung neuer Systemkomponenten des Diebstahlsicherungssystems exemplarisch anhand des Ablaufs von (bidirektionalen) Datenübertragungsprotokollen bei der direkten Kommunikation zwischen dieser Systemkomponente und der Zentralstelle erläutert (Figur 1: Zupaarung des Steuergeräts Wegfahrsperre - direkte Eingabe, Figur 2: Zupaarung des Steuergeräts Wegfahrsperre - indirekte Eingabe).

In den Figuren 1 und 2 sind als diebstahlrelevante Systemkomponenten des Diebstahlsicherungssystems DSS beispielsweise ein Steuergerät Wegfahrsperre WFS, ein Steuergerät Motorelektronik MSG und ein Handsender als Fernbedienung FB für das Steuergerät Wegfahrsperre WFS vorgesehen; zwischen den diebstahlrelevanten Systemkomponenten WFS, MSG und FB des Diebstahlsicherungssystems DSS erfolgt die Kommunikation drahtlos oder leitungsgebunden mittels der Übertragungsstrecken ÜS. Jede diebstahlrelevante Systemkomponente WFS, MSG, FB ist mit einer Identifikationsnummer ID (ID (WFS), ID (MSG), ID (FB)) und mit einer Geheimnummer GN (GN (WFS), GN (MSG), GN (FB)) versehen.
In der Zentralstelle ZS (beispielsweise ein Zentralrechner des Kraftfahrzeug-Herstellers) sind die verschiedenen Diebstahlsicherungssysteme DSS unter der Fahrgestellnummer FGN des Kraftfahrzeugs, in dem diese eingebaut sind, mit ihrer jeweiligen Codenummer CN als Kommunikationsschlüssel und ihren Systemkomponenten mit den zugehörigen Identifikationsnummern ID und Geheimnummern GN registriert.
Die Übertragungseinheit ÜE als "Vermittlungsstelle" für die Kommunikation der Systemkomponenten WFS, MSG, FB des Diebstahlsicherungssystems DSS mit der Zentralstelle ZS besteht aus einer Steuereinheit IR (beispielsweise ein Interface-Rechner) - diese ist beispielsweise beim Kraftfahrzeug-Hersteller am Bandende oder in einer Werkstatt installiert -, Verbindungsstrecken VS von der Steuereinheit IR (Interface-Rechner) zu mindestens einer der Systemkomponenten WFS, MSG, FB des Diebstahlsicherungssystems DSS (Verbindungsstrecken VS können beispielsweise als Diagnosestecker in einer Werkstatt oder Niederlassung des Kraftfahrzeug-Herstellers ausgebildet sein) und Datenleitungen DL von der Steuereinheit IR zur Zentralstelle ZS zur Übermittlung von Daten der Systemkomponenten WFS, MSG, FB des Diebstahlsicherungssystems DSS an die Zentralstelle ZS bzw. umgekehrt zur Übermittlung von Daten der Zentralstelle ZS an die Systemkomponenten WFS, MSG, FB des Diebstahlsicherungssystems DSS (die Datenleitungen DL können beispielsweise als Telefonleitungen oder als direkte Satellitenverbindung ausgebildet sein).

Gemäß der Figur 1 wird die Zupaarung eines neuen Steuergeräts Wegfahrsperre WFS an die bestehenden Systemkomponenten Steuergerät Motorelektronik MSG und Fernbedienung Handsender FB bei direkter Eingabe erläutert. Vom Steuergerät Wegfahrsperre WFS wird die Seriennummer bzw. Identifikationsnummer ID (WFS) und vom Steuergerät Motorelektronik MSG die Identifikationsnummer ID (MSG) mittels der Übertragungseinheit ÜE an die Zentralstelle ZS übermittelt, die eine Authentifizierung der beiden Steuergeräte Motorelektronik MSG und Wegfahrsperre WFS durchführt - beispielsweise durch einen sog. "challenge-and-response"-Vorgang: Übertragung der Identifikationsnummer ID (MSG) vom Steuergerät Motorelektronik MSG bzw. ID (WFS) vom Steuergerät Wegfahrsperre WFS im Klartext an die Zentralstelle ZS, Ermittlung durch die Zentralstelle ZS der Fahrgestellnummer FGN bzw. des jeweiligen Diebstahlsicherungssystems DSS, der zugehörigen Geheimnummer GN (WFS) und der Codenummer CN als gemeinsamer Kommunikationsschlüssel des Diebstahlsicherungssystems DSS, Überprüfung der Geheimnummer GN (MSG) bzw. GN (WFS), indem von der Zentralstelle ZS eine Zufallszahl ZF1 an das Steuergerät Motorelektronik MSG bzw. ZF2 an das Steuergerät Wegfahrsperre WFS übertragen wird, die diese Zufallszahl ZF1 mit der Geheimnummer GN (MSG) bzw. die Zufallszahl ZF2 mit der Geheimnummer GN (WFS) in einem kryptologischen Algorithmus verschlüsselt und als Geheimtext GTZF1 bzw. GTZF2 an die Zentralstelle ZS überträgt, die entweder durch gleichartiges Verschlüsseln bzw. durch Entschlüsseln das Ergebnis mit dem Geheimtext bzw. dem Klartext vergleicht. Nach erfolgreicher Authentifizierung der Steuergeräte Wegfahrsperre WFS und Motorelektronik MSG wird mittels der Geheimnummer GN (WFS) als kryptologischen Schlüssel die Codenummer CN durch einen kryptologischen Algorithmus zu einem Geheimtext GTCN verschlüsselt und dieser Geheimtext GTCN mittels der übertragungseinheit ÜE an das Steuergerät Wegfahrsperre WFS übermittelt. Das Steuergerät Wegfahrsperre WFS entschlüsselt aus diesem Geheimtext GTCN mittels seiner Geheimnummer GN (WFS) die Codenummer CN und verifiziert diese durch bidirektionale Kommunikation nach dem oben beschriebenen "challenge-and-response"-Vorgang mit der Codenummer CN als Schlüssel mit mindestens einer der anderen (nichtausgetauschten) diebstahlrelevanten Systemkomponenten Steuergerät Motorelektronik MSG und Fernbedienung Handsender FB. Nach erfolgreicher Authentifizierung mit Hilfe des gemeinsamen Kommunikationsschlüssels Codenummer CN ist die Zupaarung der neuen Systemkomponente Steuergerät Wegfahrsperre WFS erfolgreich abgeschlossen. Ein Austausch des Steuergeräts Motorelektronik MSG bzw. der Fernbedienung Handsender FB verläuft analog durch Eintragung der Codenummer CN in das Steuergerät Motorelektronik MSG bzw. die Fernbedienung Handsender FB.

Gemäß der Figur 2 wird die Zupaarung eines neuen Steuergeräts Wegfahrsperre WFS an die bestehenden Systemkomponenten Steuergerät Motorelektronik MSG und Handsender Fernbedienung FB bei indirekter Eingabe erläutert. Bis zur erfolgreichen Authentifizierung läuft das Verfahren wie anhand Figur 1 beschrieben. Anschließend verschlüsselt die Zentralstelle ZS sowohl die Geheimnummer GN (MSG) als auch die Geheimnummer GN (FB) mit der Geheimnummer GN (WFS) als Schlüssel und übertragt die Geheimtexte GTGNMSG und GTGNFB an das Steuergerät Wegfahrsperre WFS, die diese Geheimtexte entschlüsselt. Die vom Steuergerät Wegfahrsperre WFS ermittelten Geheimnummern GN (MSG) und GN (FB) können überprüft werden, indem das Steuergerät Wegfahrsperre WFS zunächst eine Zufallszahl ZF3 an das Steuergerät Motorelektronik MSG übermittelt, dieses die Zufallszahl ZF3 mit seiner Geheimnummer GN (MSG) als Schlüssel verschlüsselt als Geheimtext GTZF3 an das Steuergerät Wegfahrsperre WFS zurücksendet, das das Ergebnis entweder nach Verschlüsselung der Zufallszahl ZF3 oder nach Entschlüsselung des Geheimtexts GTZF3 durch Vergleich der Geheimtexte oder der Klartexte verifiziert; anschließend wird die Fernbedienung Handsender FB in üblicher Weise betätigt und damit das normale Kommunikationsprotokoll zwischen der Fernbedienung Handsender FB und dem Steuergerät Wegfahrsperre WFS in Gang gesetzt (unidirektional oder bidirektional): bei einer Übereinstimmung der Geheimnummern GN können die übertragenen Daten als verifiziert eingestuft werden. Ein Austausch des Steuergeräts Motorelektronik MSG bzw. der Fernbedienung Handsender FB verläuft analog durch Eintragung der Geheimnummern GN (MSG) bzw. GN (FB) ins Steuergerät Wegfahrsperre WFS.

## Patentansprüche

1. Verfahren zur Diebstahlsicherung motorangetriebener Kraftfahrzeuge, unter Verwendung
- eines Diebstahlsicherungssystems (DSS) mit einem die Wegfahrsperrenfunktion enthaltenden Steuergerät (WFS), mindestens einer weiteren diebstahlrelevanten Systemkomponente (MSG, FB) und Übertragungsstrecken (ÜS) zur bidirektionalen Kommunikation zwischen den diebstahlrelevanten Systemkomponenten (WFS, MSG, FB),
- einer externen Zentralstelle (ZS), und
- einer übertragungseinheit (ÜE) zur Datenübertragung zwischen den diebstahlrelevanten Systemkomponenten (WFS, MSG, FB) und der Zentralstelle (ZS),
**dadurch gekennzeichnet**:
- vor ihrer erstmaligen Inbetriebnahme wird in alle diebstahlrelevanten Systemkomponenten (WFS, MSG, FB) des Diebstahlsicherungssystems (DSS) jeweils eine für die Systemkomponente (WFS, MSG, FB) charakteristische Identifikationsnummer (ID) und eine von außerhalb der Systemkomponente (WFS, MSG, FB) nicht-auslesbare, individuelle Geheimnummer (GN) in einen nicht-flüchtigen Datenspeicher der Systemkomponente (WFS, MSG, FB) abgespeichert,
- durch die Zentralstelle (ZS) werden die Identifikationsnummern (ID) und die zugehörigen Geheimnummern (GN) der diebstahlrelevanten Systemkomponenten (WFS, MSG, FB) registriert,
- die zur Identifizierung der jeweiligen diebstahlrelevanten Systemkomponente (WFS, MSG, FB) dienenden Identifikationsnummern (ID) werden innerhalb des Diebstahlsicherungssystems (DSS) und zwischen dem Diebstahlsicherungssystem (DSS) und der Zentralstelle (ZS) im Klartext übertragen,
- die nicht im Klartext übertragenen Geheimnummern (GN) der diebstahlrelevanten Systemkomponenten dienen als Kommunikationsschlüssel für kryptologische Protokolle bei der Datenübertragung der diebstahlrelevanten Systemkomponenten (WFS, MSG, FB) innerhalb des Diebstahlsicherungssystems (DSS) oder/und mit der Zentralstelle (ZS).

2. Verfahren nach Anspruch 1, **dadurch gekennzeichnet**:
- allen diebstahlrelevanten Systemkomponenten (WFS, MSG, FB) eines Diebstahlsicherungssystems wird bei der Paarung der diebstahlrelevanten Systemkomponenten (WFS, MSG, FB) eine für das jeweilige Diebstahlsicherungssystem (DSS) spezifische Codenummer (CN) als Kommunikationsschlüssel des Diebstahlsicherungssystems (DSS) zugeordnet,
- bei der erstmaligen Inbetriebnahme einer diebstahlrelevanten Systemkomponente (WFS, MSG, FB) wird dieser von der Zentralstelle (ZS) die Codenummer (CN) durch eine bidirektionale, authentische Kommunikation zwischen dieser diebstahlrelevanten Systemkomponente (WFS, MSG, FB) und der Zentralstelle (ZS) übermittelt,
- eine Inbetriebnahme des Kraftfahrzeugs bzw. ein Motorstart kann nur dann vorgenommen werden, wenn alle diebstahlrelevanten Systemkomponenten (WFS, MSG, FB) eines Diebstahlsicherungssystems (DSS) dieselbe Codenummer (CN) besitzen.

3. Verfahren nach Anspruch 2, **dadurch gekennzeichnet, daß** bei der erstmaligen Inbetriebnahme einer diebstahlrelevanten Systemkomponente (WFS, MSG, FB)
- die diebstahlrelevante Systemkomponente (WFS, MSG, FB) ihre Identifikationsnummer (ID) der Zentralstelle (ZS) übermittelt,
- die Zentralstelle (ZS) dieser Identifikationsnummer (ID) die entsprechende Geheimnummer (GN) zuordnet,
- die Zentralstelle (ZS) die Codenummer (CN) des Diebstahlsicherungssystems (DSS) zu einem Geheimtext (GTCN) verschlüsselt,
- die Zentralstelle (ZS) diesen Geheimtext (GTCN) an die diebstahlrelevante Systemkomponente (WFS, MSG, FB) übermittelt,
- die diebstahlrelevante Systemkomponente (WFS, MSG, FB) die Codenummer (CN) aus dem Geheimtext (GTCN) entschlüsselt und in einen nicht-flüchtigen Speicher von außerhalb der diebstahlrelevanten Systemkomponente (WFS, MSG, FB) nicht-auslesbar abspeichert.

4. Verfahren nach Anspruch 3, **dadurch gekennzeichnet, daß** die Verschlüsselung der Codenummer (CN) durch die Zentralstelle (ZS) und die Entschlüsselung der Codenummer (CN) durch die diebstahlrelevante Systemkomponente (WFS, MSG, FB) mittels der Geheimnummer (GN) der diebstahlrelevanten Systemkomponente (WFS, MSG, FB) erfolgt.

5. Verfahren nach Anspruch 1, **dadurch gekennzeichnet**:
- bei der erstmaligen Inbetriebnahme des die Wegfahrsperrenfunktion enthaltenden Steuergeräts (WFS) werden die Geheimnummern aller anderen diebstahlrelevanten Systemkomponenten (MSG, FB) an das die Wegfahrsperrenfunktion enthaltende Steuergerät (WFS) übermittelt,
- bei der erstmaligen Inbetriebnahme einer anderen diebstahlrelevanten Systemkomponente (MSG, FB) wird die Geheimnummer (GN) dieser diebstahlrelevanten Systemkomponente (MSG, FB) durch eine authentische Kommunikation zwischen dieser diebstahlrelevanten Systemkomponente (MSG, FB) und der Zentralstelle (ZS) überprüft und anschließend durch eine authentische Kommunikation zwischen dem die Wegfahrsperrenfunktion enthaltenden Steuergerät (WFS) und der Zentralstelle (ZS) dem die Wegfahrsperrenfunktion enthaltenden Steuergerät (WFS) die Geheimnummer (GN) übermittelt,
- eine Inbetriebnahme des Kraftfahrzeugs bzw. ein Motorstart kann nur dann vorgenommen werden, wenn die Geheimnummern (GN) aller diebstahlrelevanten Systemkomponenten (WFS, MSG, FB) eines Diebstahlsicherungssystems (DSS) im die Wegfahrsperrenfunktion enthaltenden Steuergerät (WFS) eingetragen sind.

6. Verfahren nach Anspruch 5, **dadurch gekennzeichnet, daß** bei der erstmaligen Inbetriebnahme einer diebstahlrelevanten Systemkomponente (WFS, MSG, FB)
- die diebstahlrelevante Systemkomponente (WFS, MSG, FB) ihre Identifikationsnummer (ID) der Zentralstelle (ZS) übermittelt,
- die Zentralstelle (ZS) dieser Identifikationsnummer (ID) die entsprechende Geheimnummer (GN) zuordnet,
- die Zentralstelle (ZS) bei einer Inbetriebnahme des die Wegfahrsperrenfunktion enthaltenden Steuergeräts (WFS) die Geheimnummern (GN) aller anderen diebstahlrelevanten Systemkomponenten (MSG, FB) zu Geheimtexten (GT) verschlüsselt oder bei einer Inbetriebnahme einer anderen diebstahlrelevanten Systemkomponente (MSG, FB) deren Geheimnummer (GN) zu einem Geheimtext (GT) verschlüsselt,
- die Zentralstelle (ZS) den (die) Geheimtext(e) (GT) an das die Wegfahrsperrenfunktion enthaltende Steuergerät (WFS) übermittelt,
- das die Wegfahrsperrenfunktion enthaltende Steuergerät (WFS) die Geheimnummer(n) (GN) aus dem Geheimtext (GT) entschlüsselt und in einem nicht-flüchtigen Speicher von außerhalb des die Wegfahrsperrenfunktion enthaltenden Steuergeräts (MFS) nicht-auslesbar abspeichert.

7. Verfahren nach Anspruch 6, **dadurch gekennzeichnet, daß** die Verschlüsselung der Geheimnummer(n) (GN) durch die Zentralstelle (ZS) und die Entschlüsselung der Geheimnummer(n) (GN) durch das die Wegfahrsperrenfunktion enthaltende Steuergerät (WFS) mittels der Geheimnummer (GN (WFS)) des die Wegfahrsperrenfunktion enthaltenden Steuergeräts (WFS) erfolgt.

8. Verfahren nach einem der Ansprüche 1 bis 5, **dadurch gekennzeichnet, daß** die Kommunikation aller diebstahlrelevanten Systemkomponenten (WFS, MSG, FB) mit der Zentralstelle (ZS) direkt erfolgt, indem alle diebstahlrelevanten Systemkomponenten (WFS, MSG, FB) direkt mit der Übertragungseinheit (ÜE) verbunden werden.

9. Verfahren nach einem der Ansprüche 1 bis 7, **dadurch gekennzeichnet, daß** die Kommunikation der diebstahlrelevanten Systemkomponenten (MSG, FB) mit der Zentralstelle (ZS) indirekt über das die Wegfahrsperrenfunktion enthaltende Steuergerät (WFS) erfolgt, indem die diebstahlrelevanten Systemkomponenten (MSG, FB) indirekt über das die Wegfahrsperrenfunktion enthaltende Steuergerät (WFS) mit der Übertragungseinheit (ÜE) verbunden werden.

10. Verfahren nach einem der Ansprüche 1 bis 9, **dadurch gekennzeichnet, daß** in der Zentralstelle (ZS) der aktuelle Status der Diebstahlsicherungssysteme (DSS) bzw. der zu den Diebstahlsicherungssystemen (DSS) gehörigen Kraftfahrzeuge registriert wird, und daß dieser Status bei jeder Kommunikation der Zentralstelle (ZS) mit den diebstahlrelevanten Systemkomponenten (WFS, MSG, FB) eines Diebstahlsicherungssystems (DSS) überprüft wird.

11. Verfahren nach einem der Ansprüche 1 bis 10, **dadurch gekennzeichnet, daß** beim Austausch einer diebstahlrelevanten Systemkomponente (WFS, MSG, FB) eines Diebstahlsicherungssystems (DSS) vor der Übermittlung der Codenummer (CN) an diese diebstahlrelevante Systemkomponente (WFS, MSG, FB) bzw. der Geheimnummer (GN) durch die Zentralstelle (ZS) an das die Wegfahrsperrenfunktion enthaltende Steuergerät (WFS) mindestens eine weitere diebstahlrelevante Systemkomponente (WFS, MSG, FB) dieses Diebstahlsicherungssystems (DSS) überprüft wird.

12. Verfahren nach Anspruch 11, **dadurch gekennzeichnet, daß** zumindest das die Wegfahrsperrenfunktion enthaltende Steuergerät (WFS) als weitere diebstahlrelevante Systemkomponente (WFS, MSG, FB) überprüft wird.

13. Verfahren nach Anspruch 11 oder 12, **dadurch gekennzeichnet, daß** eine Überprüfung der Geheimnummer (GN) der weiteren diebstahlrelevanten Systemkomponente(n) (WFS, MSG, FB) durch eine bidirektionale authentische Kommunikation zwischen der Zentralstelle (ZS) und der (den) anderen diebstahlrelevanten Systemkomponente(n) (WFS, MSG, FB) vorgenommen wird.

14. Verfahren nach einem der Ansprüche 2, 5 oder 13, **dadurch gekennzeichnet, daß** bei der bidirektionalen authentischen Kommunikation die Identifikationsnummer (ID) der zu überprüfenden diebstahlrelevanten Systemkomponenten (WFS, MSG, FB) an die Zentralstelle (ZS) gesendet wird, die Zentralstelle (ZS) der diebstahlrelevanten Systemkomponenten (WFS, MSG, FB) eine Zufallszahl (ZF) übermittelt, die Zufallszahl (ZF) von der diebstahlrelevanten Systemkomponente (WFS, MSG, FB) mit ihrer Geheimnummer (GN) zu einem Geheimtext (GTZF) verschlüsselt wird, der Geheimtext (GTZF) an die Zentralstelle (ZS) übermittelt wird, die Zentralstelle (ZS) entweder den Geheimtext (GTZF) mit Hilfe der Geheimnummer (GN) der diebstahlrelevanten Systemkomponente (WFS, MSG, FB) entschlüsselt und mit der Zufallszahl (ZF) vergleicht oder die Zufallszahl (ZF) mit der Geheimnummer (GN) der diebstahlrelevanten Systemkomponente (WFS, MSG, FB) zu einem Geheimtext (GTZF) verschlüsselt und diesen mit dem von der diebstahlrelevanten Systemkomponente (WFS, MSG, FB) übermittelten Geheimtext (GTZF) vergleicht.

## Claims

1. Method for protecting motor-driven motor vehicles against theft, using
- a system (DSS) for protecting against theft, having a control unit (WFS) which contains the immobilizer function, at least one further theft-related system component (MSG, FB) and transmission links (ÜS) for bidirectional communication between the theft-related system components (WFS, MSG, FB),
- an external central office (ZS), and
- a transmission unit (ÜE) for transmitting data between the theft-related system components (WFS, MSG, FB) and the central office (ZS),
**characterized in that**:
- before they are first put into operation, an identification number (ID) which in each case is characteristic of the system component (WFS, MSG, FB) is stored in each of the theft-related system components (WFS, MSG, FB) of the system (DSS) for protecting against theft, and an individual secret number (GN) which cannot be read out from outside the system component (WFS, MSG, FB) is stored in a non-volatile data memory of the system component (WFS, MSG, FB),
- the identification numbers (ID) and the associated secret numbers (GN) of the theft-related system components (WFS, MSG, FB) are registered by the central office (ZS),
- the identification numbers (ID) which serve to identify the respective theft-related system component (WFS, MSG, FB) are transmitted in plane text within the system (DSS) for protecting against theft and between the system (DSS) for protecting against theft and the central office (ZS),
- the secret numbers (GN), not transmitted in plane text, of the theft-related system components serve as communication keys for cryptological protocols during the data transmission of the theft-related system components (WFS, MSG, FB) within the system (DSS) for protecting against theft and/or to the central office (ZS).

2. Method according to Claim 1, **characterized in that**
- a code number (CN) which is specific for the respective system (DSS) for protecting against theft is assigned, as a communications key of the system (DSS) for protecting against theft, to all the theft-related system components (WFS, MSG, FB) of a system for protecting against theft, during the pairing of the theft-related system components (WFS, MSG, FB),
- when the theft-related system component (WFS, MSG, FB) is first put into operation, the code number (CN) is transferred to said system component (WFS, MSG, FB) by the central office (ZS) by means of a bidirectional authentic communication between this theft-related system component (WFS, MSG, FB) and the central office (ZS),
- the motor vehicle can be put into operation or its engine started only if all the theft-related system components (WFS, MSG, FB) of a system (DSS) for protecting against theft have the same code number (CN).

3. Method according to Claim 2, **characterized in that** when a theft-related system component (WFS, MSG, FB) is first put into operation,
- the theft-related system component (WFS, MSG, FB) transfers its identification number (ID) to the central office (ZS),
- the central office (ZS) assigns the corresponding secret number (GN) to this identification number (ID),
- the central office (ZS) encrypts the code number (CN) of the system (DSS) for protecting against theft to a secret text (GTCN),
- the central office (ZS) transfers this secret text (GTCN) to the theft-related system component (WFS, MSG, FB),
- the theft-related system component (WFS, MSG, FB) decrypts the code number (CN) from the secret text (GTCN) and stores it in a non-volatile memory in such a way that it cannot be read from outside the theft-related system component (WFS, MSG, FB).

4. Method according to Claim 3, **characterized in that** the encryption of the code number (CN) is carried out by the central office (ZS) and the decryption of the code number (CN) is carried out by the theft-related system component (WFS, MSG, FB) by means of the secret number (GN) of the theft-related system component (WFS, MSG, FB).

5. Method according to Claim 1, **characterized in that**:
- when the control unit (WFS) containing the immobilizer function is first put into operation, the secret numbers of all the other theft-related system components (MSG, FB) are transferred to the control unit (WFS) containing the immobilizer function,
- when another theft-related system component (MSG, FB) is first put into operation, the secret number (GN) of this theft-related system component (MSG, FB) is checked by an authentic communication between this theft-related system component (MSG, FB) and the central office (ZS), and the secret number (GN) is subsequently transferred to the control unit (WFS) containing the immobilizer function by means of an authentic communication between the control unit (WFS) containing the immobilizer function and the central office (ZS),
- the motor vehicle can be put into operation or its engine started only if the secret numbers (GN) of all the theft-related system components (WFS, MSG, FB) of a system (DSS) for protecting against theft have been input into the control unit (WFS) containing the immobilizer function.

6. Method according to Claim 5, **characterized in that**, when a theft-related system component (WFS, MSG, FB) is first put into operation,
- the theft-related system component (WFS, MSG, FB) transfers its identification number (ID) to the central office (ZS),
- the central office (ZS) assigns the corresponding secret number (GN) to this identification number (ID),
- when the control unit (WFS) containing the immobilizer function is put into operation, the central office (ZS) encrypts the secret numbers (GN) of all the other theft-related system components (MSG, FB) to form secret texts (GT), or when another theft-related system component (MSG, FB) is put into operation, encrypts its secret number (GN) to form a secret text (GT),
- the central office (ZS) transfers the secret text or texts (GT) to the control unit (WFS) containing the immobilizer function,
- the control unit (WFS) containing the immobilizer function decrypts the secret number or numbers (GN) from the secret text (GT) and stores it/them in a non-volatile memory in such a way that they cannot be read from outside the control unit (WFS) containing the immobilizer function.

7. Method according to Claim 6, **characterized in that** the encryption of the secret number or numbers (GN) is carried out by the central office (ZS) and the decryption of the secret number or numbers (GN) by the control unit (WFS) containing the immobilizer function by means of the secret number (GN) (WFS)) of the control unit (WFS) containing the immobilizer function.

8. Method according to one of Claims 1 to 5, **characterized in that** the communication of all the theft-related system components (WFS, MSG, FB) with the central office (ZS) takes place directly by virtue of the fact that all the theft-related system components (WFS, MSG, FB) are connected directly to the transmission unit (ÜE).

9. Method according to one of Claims 1 to 7, **characterized in that** the communication between the theft-related system components (MSG, FB) and the central office (ZS) takes place indirectly via the control unit (WFS) containing the immobilizer function by virtue of the fact that the theft-related system components (MSG, FB) are connected indirectly to the transmission unit (ÜE) via the control unit (WFS) containing the immobilizer function.

10. Method according to one of Claims 1 to 9, **characterized in that** the current status of the systems (DSS) for protecting against theft or of the motor vehicles associated with the systems (DSS) for protecting against theft is registered in the central office (ZS), and **in that** this status is checked whenever the central office (ZS) communicates with the theft-related system components (WFS, MSG, FB) of a system (DSS) for protecting against theft.

11. Method according to one of Claims 1 to 10, **characterized in that**, when a theft-related system component (WFS, MSG, FB) of a system (DSS) for protecting against theft is replaced, at least one further theft-related system component (WFS, MSG, FB) of this system (DSS) for protecting against theft is checked before the code number (CN) is transferred to this theft-related system component (WFS, MSG, FB) or the secret number (GN) is transferred to the control unit (WFS) containing the immobilizer function by the central office (ZS).

12. Method according to Claim 11, **characterized in that** at least the control unit (WFS) containing the immobilizer function is checked as a further theft-related system component (WFS, MSG, FB).

13. Method according to Claim 11 or 12, **characterized in that** the secret number (GN) of the further theft-related system component or components (WFS, MSG, FB) is checked by a bidirectional authentic communication between the central office (ZS) and the other theft-related system component or components (WFS, MSG, FB).

14. Method according to one of Claims 2, 5 or 13, **characterized in that**, during the bidirectional authentic communication, the identification number (ID) of the theft-related system components (WFS, MSG, FB) to be checked is transmitted to the central office (ZS), the central office (ZS) of the theft-related system components (WFS, MSG, FB) transfers a random number (ZF), the random number (ZF) is encrypted by the theft-related system component (WFS, MSG, FB) with its secret number (GN) to form a secret text (GTZF), the secret text (GTZF) is transferred to the central office (ZS), the central office (ZS) either decrypts the secret text (GTZF) using the secret number (GN) of the theft-related system component (WFS, MSG, FB) and compares it with the random number (ZF) or encrypts the random number (ZF) with the secret number (GN) of the theft-related system component (WFS, MSG, FB) to form a secret text (GTZF) and compares the latter with the secret text (GTZF) transferred by the theft-related system component (WFS, MSG, FB).

## Revendications

1. Procédé de protection antivol d'un véhicule automobile utilisant:
- un système antivol (DSS) comportant un appareil de commande (WFS) avec une fonction d'immobilisation, au moins l'un d'autres composants du système antivol (MSG, FB) et des chemins de transmission (US) pour la communication bidirectionnelle entre les composants du système concernant l'antivol (WFS, MSG, FB),
- un poste central externe (ZS), et
- une unité de transmission (UE) pour transmettre des données entre les composants du système concernant l'antivol (WFS), MSG, FB) et le poste central (ZS),
**caractérisé en ce qu'**
- avant sa première mise en route, dans tous les composants du système concernant l'antivol (WFS, MSG, FB) du système antivol (DSS), on enregistre un numéro d'identification caractéristique (ID) et un numéro individuel secret (GN) non lisible de l'extérieur des composants du système (WFS, MSG, FB) dans une mémoire de données non volatile des composants du système (WFS, MSG, FB),
- le poste central (ZS) enregistre les numéros d'identification (ID) et les numéros secrets correspondants (GN) des composants du système concernant l'antivol (WFS, MSG, FB),
- on transmet les numéros d'identification (ID) servant à identifier les composants respectifs du système concernant l'antivol (WFS, MSG, FB), dans le système antivol (DSS) et entre le système antivol (DSS) et le poste central (ZS) en texte clair,
- les numéros secrets (GN) des composants du système concernant l'antivol, qui ne sont pas transmis en texte clair, servent de clés de commutation pour le protocole de cryptage pour la transmission des données et des composants du système concernant l'antivol (WFS, MSG, FB) à l'intérieur du système antivol (DSS) et/ou avec le poste central (ZS).

2. Procédé selon la revendication 1,
- **caractérisé en ce qu'**
- on associe à tous les composants du système concernant l'antivol (WFS, MSF, FB) d'un système antivol, lors de la mise en paires des composants du système concernant l'antivol (WFS, MSG, FB), un numéro de code (CN) spécifique du système antivol (DSS) comme clé de communication du système antivol (DSS),
- lors de la première mise en route d'un composant du système composant l'antivol (WFS, MSG, FB), celui-ci reçoit du poste central (ZS), les numéros de code (CN) par une communication authentique bidirectionnelle entre ces composants du système concernant l'antivol (WFS, MSG, FB) et le poste central (ZS),
- la mise en route du véhicule ou le démarrage du moteur ne peuvent être effectués que si tous les composants concernant l'antivol (WFS, MSF, FB) d'un système antivol (DSS) ont le même numéro de code (CN).

3. Procédé selon la revendication 2,
**caractérisé en ce que**
lors de la première mise en route d'un composant du système concernant l'antivol (WFS, MSG, FB):
- les composants du système concernant l'antivol (WFS, MSG, FB) transmettent leur numéro d'identification (ID) au poste central (ZS),
- le poste central (ZS) attribue à ce numéro d'identification (ID), un numéro secret (GN) correspondant,
- le poste central (ZS) crypte le numéro de code (CN) du système anti-vol (DSS) en un texte secret (GTCN),
- le poste central (ZS) transmet ce texte secret (GTCN) aux composants du système concernant l'antivol (WFS, MSG, FB),
- les composants du système concernant l'antivol (WFS, MSG, FB) décodent le numéro de code (CN) à partir du texte secret (GTCN) et l'enregistrent dans une mémoire non volatile qui ne peut être lue de l'extérieur des composants du système concernant l'antivol (WFS, MSG, FB).

4. Procédé selon la revendication 3.
**caractérisé en ce que**
le cryptage du numéro de code (CN) par le poste central (ZS) et le décryptage du numéro de code (CN) par les composants du système concernant l'antivol (WFS, MSG, FB) se font à l'aide du numéro secret (GN) des composants du système concernant l'antivol (WFS, MSG, FB).

5. Procédé selon la revendication 1,
**caractérisé en ce que**
- lors de la première mise en service de l'appareil de commande comportant la fonction d'immobilisation (WFS), on transmet tous les numéros de code de tous les composants du système concernant l'antivol (MSG, FB) à l'appareil de commande comportant la fonction d'immobilisation (WFS),
- lors de la première mise en service d'un autre composant du système concernant l'antivol (MSG, FB), le numéro secret (GN) de ce composant du système concernant l'antivol (MSB, FB) est vérifié par une communication authentique entre ce composant du système concernant l'antivol (MSG, FB) et le poste central (ZS) et ensuite par une communication authentique entre l'appareil de commande comportant la fonction d'immobilisation (WFS) et le poste central (ZS), on transmet le numéro secret (GN) à l'appareil de commande comportant la fonction d'immobilisation (WFS),
- la mise en route du véhicule ou le lancement du moteur ne peut se faire que si les numéros secrets (GN) de tous les composants du système concernant l'antivol (WFS, MSG, FB) d'un système antivol (DSS) sont enregistrés dans l'appareil comportant la fonction d'immobilisation (WFS).

6. Procédé selon la revendication 5,
**caractérisé en ce que**
lors de la première mise en route d'un composant du système concernant l'antivol (WFS, MSG, FB),
- les composants du système concernant l'antivol (WFS, MSG, FB) transmettent leur numéro d'identification (ID) au poste central (ZS),
- le poste central (ZS) attribue à ce numéro d'identification (ID), le numéro secret correspondant (GN),
- le poste central (ZS), lors d'une mise en service de l'appareil de commande (WFS) comportant la fonction d'immobilisation, crypte les numéros secrets (GN) de tous les autres composants du système concernant l'antivol (MSG, FB) en un texte secret (GT) ou pour une mise en service d'un autre composant du système concernant l'antivol (MSG, FB), son numéro secret (GN) sera crypté dans un texte secret (GT),
- le poste central (ZS) transmet le ou les textes secrets (GT) à l'appareil de commande (WFS) comportant la fonction d'immobilisation,
- l'appareil de commande comportant la fonction d'immobilisation (WFS) décrypte le ou les numéros secrets (GN) contenus dans le texte secret (GT) et les mémorise dans une mémoire non volatile, non lisible de l'extérieur de l'appareil de commande comportant la fonction d'immobilisation (WFS).

7. Procédé selon la revendication 6,
**caractérisé en ce que**
le cryptage du ou des numéros secrets (GN) par le poste central (ZS) et le décryptage des numéros secrets (GN) par l'appareil de commande comportant la fonction d'immobilisation (WFS) se font à l'aide du numéro secret (GN (WFS)) de l'appareil de commande comportant la fonction d'immobilisation (WFS).

8. Procédé selon l'une quelconque des revendications 1 à 5,
**caractérisé en ce que**
la communication de tous les composants du système concernant l'antivol (WFS, MSG, FB) se fait directement avec le poste central (ZS), **en ce que** tous les composants du système concernant l'antivol (WFS, MSG, FB) sont reliés directement à l'unité de transmission.

9. Procédé selon l'une quelconque des revendications 1 à 7,
**caractérisé en ce que**
la communication des composants du système concernant l'antivol (MSG, FB) avec le poste central (ZS) se fait indirectement par l'intermédiaire de l'appareil de commande comportant la fonction d'immobilisation (WFS), **en ce que** les composants du système concernant l'antivol (MSG, FB) sont reliés directement par l'appareil de commande comportant la fonction d'immobilisation (WFS) avec l'unité de transmission (ÜE).

10. Procédé selon l'une quelconque des revendications 1 à 9,
**caractérisé en ce que**
le poste central (ZS) enregistre l'état actuel du système antivol (DSS) ou du véhicule équipé du système antivol (DSS) et cet état est vérifié à chaque communication du poste central (ZS) avec les composants du système concernant l'antivol (WFS, MSG, FB) d'un système antivol (DSS).

11. Procédé selon l'une quelconque des revendications 1 à 10,
**caractérisé en ce que**
lors du remplacement d'un composant du système concernant l'antivol (WFS, MSG, FB) d'un système antivol (DSS), avant la transmission des numéros de code (CN) à ce composant du système concernant l'antivol (WFS, MSG, FB) ou le numéro secret (GN) par le poste central (ZS) à l'appareil de commande comportant la fonction d'immobilisation (WFS), on vérifie au moins un autre composant du système concernant l'antivol (WFS, MSG, FB) de ce système antivol (DSS).

12. Procédé selon la revendication 11,
**caractérisé en ce qu'**
au moins l'appareil de commande comportant la fonction d'immobilisation (WFS) est vérifié comme autre composant du système concernant l'antivol (WFS, MSG, FB).

13. Procédé selon les revendications 11 ou 12,
**caractérisé en ce qu'**
on effectue une vérification des numéros secrets (GN) des autres composants du système concernant l'antivol (WFS, MSG, FB) par une communication authentique bidirectionnelle entre le poste central (ZS) et le ou les autres composants du système concernant l'antivol (WFS, MSG, FB).

14. Procédé selon l'une quelconque des revendications 2, 5 ou 13,
**caractérisé en ce que**
lors d'une communication bidirectionnelle authentique, on envoie les numéros d'identification (ID) des composants du système concernant l'antivol (WFS, MSG, FB) au poste central (ZS), le poste central (ZS) transmet aux composants du système concernant l'antivol (WFS, MSG, FB) un nombre aleatoire (ZF), ce nombre alératoire (ZF) est crypté par les composants du système concernant l'antivol (WFS, MSG, FB) avec leur numéro secret (GN) pour former un texte secret (GTZF), le texte secret (GTZF) est transmis au poste central (ZS),
le poste central (ZS) soit décrypte le texte secret (GTZF) à l'aide du numéro secret (GN) des composants du système concernant l'antivol (WFS, MSG, FB) et le compare au nombre aléatoire (ZF), soit crypte le nombre aléatoire (ZF) avec le numéro secret (GN) des composants du système concernant l'antivol (WFS, MSG, FB) dans un texte secret (GTZF) et compare celui-ci avec le texte secret (GTZF) transmis par les composants du système concernant l'antivol (WFS, MSG, FB).
